# EUROPEAN PATENT APPLICATION

(11) **EP 4 656 453 A1**
(43) Date of publication of application: **03.12.2025**
(21) Application number: 25168763.8
(22) Date of filing: 07.04.2025
(51) Int. Cl.: B60N 2/02, B60N 2/90

(54) **BOLSTERS ADJUSTABLE IN MULTIPLE DIRECTIONS FOR CUSTOM SEAT CONTOURING**

(30) Priority: 29.05.2024 US 202463652767 P; 17.02.2025 US 202519055038
(71) Applicant: Lear Corporation, Southfield, MI 48033 (US)
(72) Inventor: Abdella, David, Royal Oak, MI, 48073 (US); Cloutier, Timothy M., Clawson, MI, 48017 (US); Blair, Samuel, Rochester, MI, 48306 (US)
(74) Representative: Grünecker Patent- und Rechtsanwälte PartG mbB

(57) **Abstract**

An apparatus includes a seat cushion, a seat back supported relative to the seat cushion, wherein at least one of the seat back and the seat cushion includes at least two side bolster regions spaced apart laterally from each other, and a plurality of fluid bladders associated with each of the at least two side bolster regions. At least a subset of fluid bladders in each side bolster region are aligned with each other. Pressure in each fluid bladder is selectively adjustable in a plurality of directions.

## Description

### RELATED APPLICATIONS

This application claims the benefit of U.S. Provisional Application No. 63/652,767, filed May 29, 2024, the entirety of which is herein incorporated by reference.

### BACKGROUND

Seats may include a bolster fluid bladder in a seat back or seat cushion to provide lateral support.

### BRIEF DESCRIPTION OF THE DRAWINGS

Figure 1 is a perspective view of an example seat.
Figure 2 is a perspective view of the seat of Figure 1 with external covering materials removed to show multiple layered bolster fluid bladders and an associate control system.
Figure 3 is similar to Figure 2 and shows actuating the fluid bladders to provide upper shoulder and lower thigh support.
Figure 4 is similar to Figure 2 and shows actuating the fluid bladders to provide mid torso and mid-thigh support.
Figure 5 is similar to Figure 2 and shows actuating the fluid bladders to provide lower torso and hip support.
Figure 6 is a schematic illustration of a four-way rocker switch.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

It should be understood that terms such as "about," "substantially," and "generally" are not intended to be boundary less terms, and should be interpreted consistent with the way one skilled in the art would interpret those terms.

This disclosure relates to side bolster regions that are spaced apart laterally from each other in a seat structure and a plurality of fluid bladders that are associated with each side bolster regions, wherein at least a subset of fluid bladders in each side bolster region are aligned with each other, and pressure in each fluid bladder is selectively adjustable in a plurality of directions.

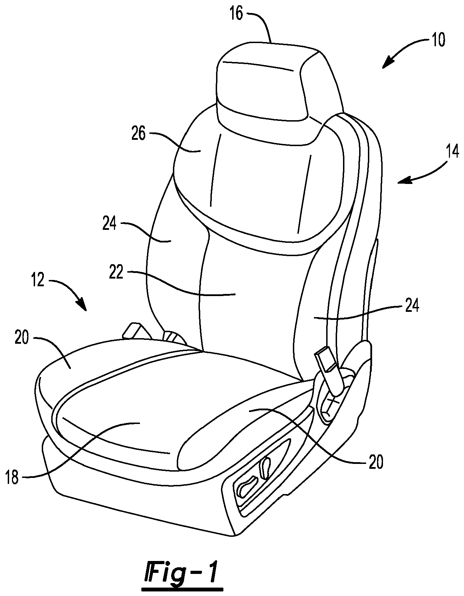

Figure 1 illustrates a seat assembly 10 according to one example embodiment. The seat assembly 10 may be utilized as a vehicle seat assembly 10 for seating in a vehicle, such as an automobile, an aircraft, a watercraft, or any other seating environment. The seat assembly 10 includes a supporting structure such as a seat bottom or seat cushion 12, which is mountable to a fixed structure. The seat cushion 12 may be adapted to be adjustable in multiple directions such as, for example, being mounted for motor-driven adjustable translation in a fore and aft direction and in an up and down direction of a vehicle. The seat assembly 10 further includes a supporting structure such as a seat back 14 that extends upright relative to the seat cushion 12, and which may be pivotally connected to a fixed vehicle or seat structure for pivotal adjustment relative to the seat cushion 12. The seat back 14 may also be movable and adjustable relative to the seat cushion 12 in multiple directions A head restraint 16 may also be mounted to the seat back 14.

The seat cushion 12 includes a central seating surface 18 and a seating surface along a pair of side bolster regions 20 laterally spaced about the central seating surface 18. The seat back 14 includes a pelvic/lumbar seating surface 22 with a pair of laterally spaced apart side bolster regions 24 on either side. A thoracic/shoulder seating surface 26 is provided above the pelvic/lumbar seating surface 22 and the seating surface of seat back side bolster regions 24. The side bolster regions 20, 24 comprise discrete areas that extend along lateral side edges of the seat cushion 12 or seat back 14. It should be understood that this is just one example of a seat configuration, and that other configurations could also be utilized.

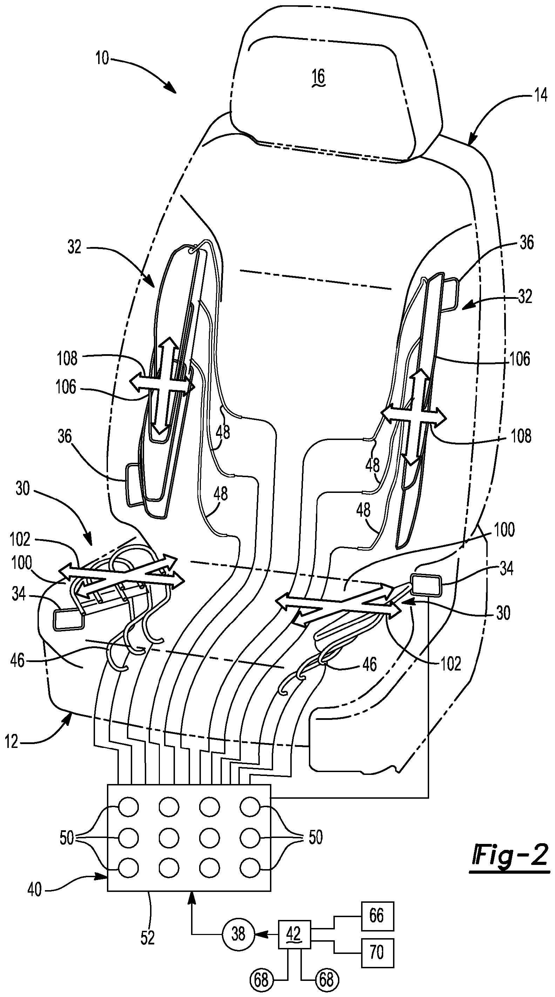

Figure 2 illustrates the seat assembly 10 with a cover, trim, and foam removed for revealing underlying components. In implementations, the side bolster regions 20 of the seat cushion 12 include a plurality of fluid bladders 30, and the side bolster regions 24 of the seat back 14 include a plurality of fluid bladders 32. Each of the side bolster fluid bladders 30, 32 is supported upon a frame 34, 36 of the corresponding seat cushion 12 and seat back 14. The side bolster fluid bladders 30, 32 provide lateral support to a seated occupant when the vehicle experiences a turn or cornering.

The seat assembly 10 also includes an actuator assembly 38 for controlling inflation of the bladders 30, 32. The actuator assembly 38 may comprise a compressor or pneumatic pump that is connected to a valve bank 40 to provide a source of fluid to the fluid bladders 30, 32. A seat control module or control system is provided in the seat bottom 12 or seat back 14 and is identified generally as comprising one or more controllers 42. In one example, the one or more controllers 42 regulate compressed air into and out of the bladders 30, 32 in the seat assembly 10. The controllers 42 and actuator assembly 38 may be installed in the seat back 14 or installed under the seat cushion 12, or anywhere suitable in the vehicle.

The one or more controllers 42 may include a processing unit and non-transitory memory for executing various control strategies. The processing unit can be a custom made or commercially available processor, a central processing unit (CPU), or generally any device for executing software instructions. The memory can include any one or combination of volatile memory elements and/or nonvolatile memory elements. The processing unit can be programmed to execute one or more programs stored in the memory. The programs may be stored in the memory as software code, for example. The programs stored in the memory may include one or more additional or separate programs, each of which includes an ordered list of executable instructions for implementing logical functions associated with controlling the valve bank. The controllers 42 may also be in communication with, and responsive to instructions from, another controller associated with any one of a plurality of vehicle systems.

As shown in Figure 2, the side bolster regions 20, 24 of the seat back 14 or seat cushion 12 include a plurality of layered fluid bladders 30, 32, wherein each fluid bladder is selectively adjustable in multiple directions until a desired pressure at a desired location is achieved. As such, each side bolster regions 20, 24 is comprised of a plurality of fluid bladders 30, 32 that each comprise a discrete pneumatic cell, for example. At least a subset of fluid bladders, e.g., at least two or more of total number of bladders, in each side bolster region 20, 24 at least partially overlap each other and/or are aligned with each other. For example, each fluid bladder in one of the side bolster regions 20, 24 overlaps at least one end of an adjacent fluid bladder to provide a layered/stacked configuration.

In the example shown, the seat cushion side bolster regions 20 each include three fluid bladders 30, and the seat back side bolster regions 24 each include three fluid bladders 32. However, two fluid bladders or more than three fluid bladders could be used in each of these side bolster regions.

In implementations, the pressure in each fluid bladder 30, 32 is selectively adjustable in a plurality of directions as shown in Figure 2. For example, each fluid bladder 30, 32 is selectively adjustable in at least in four directions, e.g., fore/aft 100 and lateral 102 (right/left) for the seat cushion 12, and vertical (up/down) 106 and lateral 108 (right/left) for the seat back 14.

In implementations, the bladders 30, 32 are independently controlled via the one or more controllers 42. For example, the one or more controllers 42 control the actuator assembly 38 to independently control and regulate inflation and deflation of each fluid bladder 30, 32 via the valve bank 40 and associated pneumatic connectors. In implementations, the seat cushion side bolster fluid bladders 30 each include a dedicated fluid connection line 46, and the seat back fluid bladders 32 each include a dedicated fluid connection line 48. The fluid connection lines 46, 48 are each fluidly connected to the valve bank 40. In one example, the fluid connection lines 46, 48 comprise flexible plastic tubing that is routed through the seat back 14 and seat cushion 12 to fluidly connect each bladder to the valve bank 40. The valve bank 40 is comprised of a plurality of valves 50 enclosed within a housing 52. Any type of valve bank configuration can be used for the actuator assembly 38.

In implementations, each fluid bladder 30 has a dedicated valve 50, e.g., each bladder only has one valve that is solely used for that bladder, in the valve bank 40, and each fluid bladder 30, 32 has and a dedicated fluid connection line 46, 48, e.g., each bladder only has one single fluid connection line, which connects each fluid bladder 30, 32 to an associated dedicated valve 50.

In implementations, laterally spaced bladders may be pair together and associated with one fluid connection line. For example, in the seat back 14: the upper left and right bladders 64 could be paired together; the left and right middle bladders 62 could be paired together; and the left and right lower bladders 60 could be paired together such that three connection lines 48 would control the six seat back bladders. Further, for example, in the seat cushion 12: the upper left and right bladders 64 could be paired together; the left and right middle bladders 62 could be paired together; and the left and right lower bladders 60 could be paired together such that three connection lines 46 would control the six seat cushion bladders.

In one implementation, the bladders 30, 32 provide a bolster function and/or a massage function. For example, the plurality of fluid bladders 30, 32 may comprise bolster bladders, e.g., bladders that apply constant lateral pressure as a static bolster support function, or massage bladders, e.g., bladders that apply intermittent/pulsing lateral pressure for active massage function.

In one implementation, the bladders 30, 32 comprise both bolster bladders and massage bladders.

As discussed above, the bladders 30, 32 in each side bolster regions 20, 24 are at least partially overlapping each other. In one example, the bladders are offset-layered along a linear path. The fluid bladders 30, 32 in each side bolster region 20, 24 are in a layered arrangement by being placed such that each bladder at least partially covers one end of an adjacent bladder in a stacked arrangement along a linear path. In one example, the linear path comprises a longitudinal path, e.g., extending in a fore-aft direction along a length of a vehicle, or a vertical path, e.g., extending up-down along a height of the vehicle. Thus, the bladders 30 in the seat cushion side bolster region 20 are aligned with each other in the longitudinal direction defined by the longitudinal path, and the bladders 32 in the seat back side bolster region 24 are aligned with each other in the vertical direction defined by the vertical path.

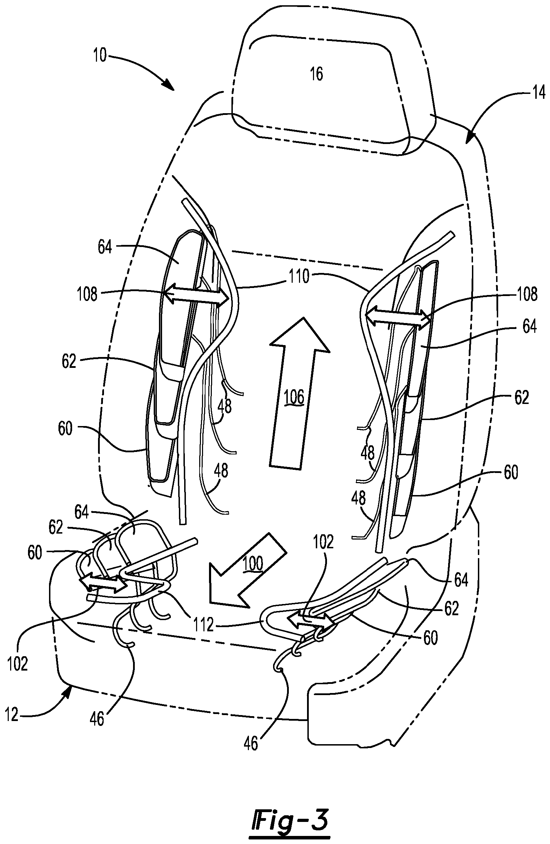

In one example shown in Figures 3-5, each set of bladders in each side bolster region comprises at least a first fluid bladder that comprises a base fluid bladder 60, a second fluid bladder 62, and a third fluid bladder 64. The base fluid bladder 60 comprises a lowermost bladder in a stack of bladders, the second fluid bladder 62 comprises a middle bladder in the stack of bladders that rests on top of and partially overlaps the base fluid bladder 60, and the third fluid bladder 64 comprises the uppermost or top bladder in the stack of bladders that rests on top of and partially overlaps the second fluid bladder 62.

Figure 3 is shows actuating the fluid bladders 60, 62, 64 to provide upper shoulder and lower thigh support. An example profile 110 is shown for upper shoulder support, and example profile 112 is shown for lower thigh support.

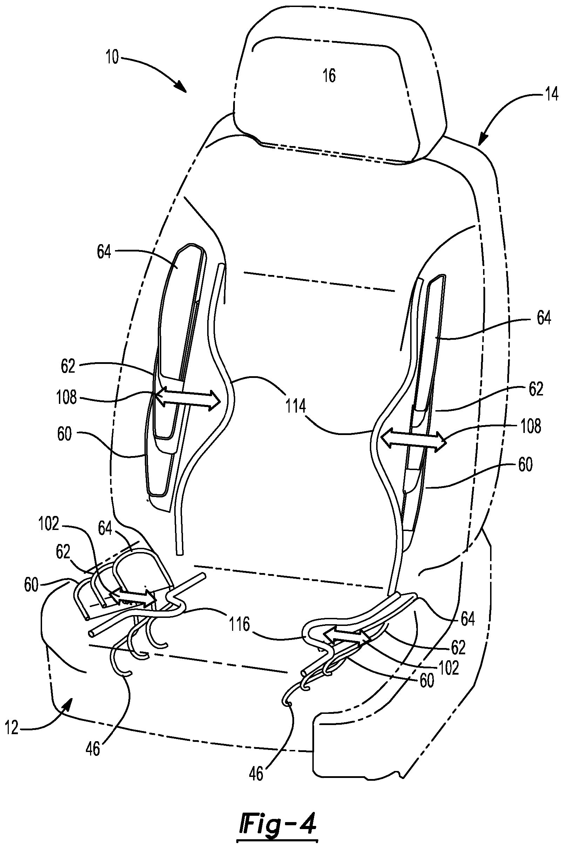

Figure 4 shows actuating the fluid bladders 60, 62, 64 to provide mid torso and mid-thigh support. An example profile 114 is shown for mid torso support, and example profile 116 is shown for mid-thigh support.

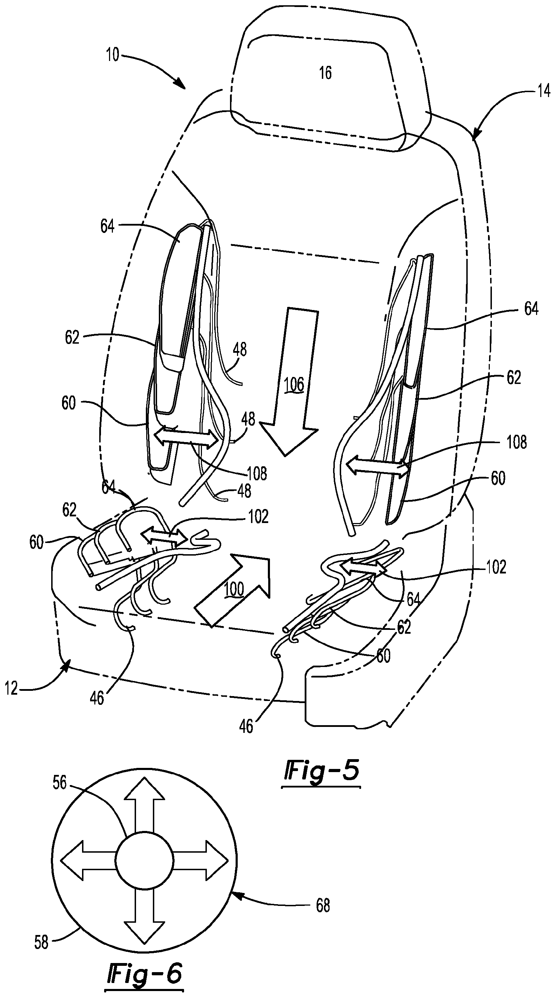

Figure 5 shows actuating the fluid bladders 60, 62, 64 to provide lower torso and hip support. An example profile 118 is shown for lower torso support, and example profile 120 is shown for hip support.

In one implementation, the bladders 60, 62, 64 have rolling inflation/deflation to adjust a pressure location within the associated side bolster region 20, 24. The subset of fluid bladders 60, 62, 64 in each side bolster region 20, 24 cooperate with each other such that there is rolling inflation and deflation, e.g., as one bladder is inflating an adjacent bladder is deflating, of the base fluid bladder 60, the second fluid bladder 62, and the third fluid bladder 64 along the linear path. This rolling inflation/deflation provides for a desired pressure level, e.g., a final constant lateral pressure, to be selectively movable to a selected location. The selected location for the seat back 14 is a location along the vertical path, and the selected location for the seat cushion 12 is a location along the longitudinal path. In one implementation, the selected location is selected by a seat occupant to account for variations in height/weight of the seat occupant.

In one example, when the second fluid bladder 62 is inflated, the desired pressure is movable in a first direction along a vertical linear path, e.g., up/down in the seat back 14, or in a first direction along a longitudinal linear path, e.g., fore/aft in the seat cushion 12, by inflating the third fluid bladder 64 while the second fluid bladder 62 deflates. In one example, when the second fluid bladder 62 is inflated, the pressure is movable in a second direction, opposite of the first direction, by inflating the base fluid bladder 60 while the second fluid bladder 32 deflates.

In one example, the desired pressure is adjustable in opposing directions along a lateral linear path, e.g., right/left, by inflating and deflating at least one of the base fluid bladder 60, the second fluid bladder 62, and the third fluid bladder 64 that is associated with a maximum pressure location along the vertical or longitudinal linear path.

In one example, pressure in the subset of fluid bladders 60, 62, 64 in each side bolster region 24 of the seat back 14 is adjustable along the vertical linear path, and the pressure is in the subset of fluid bladders 60, 62, 64 in each side bolster region 24 of the seat back 14 is adjustable along the lateral linear path.

In one example, pressure in the subset of fluid bladders 60, 62, 64 in each side bolster region 20 of the seat cushion 12 is adjustable along the longitudinal linear path, and the pressure is in the subset of fluid bladders 60, 62, 64 in each side bolster region 20 of the seat cushion 12 is adjustable along the lateral linear path.

In one implementation, as a starting point, the middle fluid bladder 62 of the seat back 14 is inflated. To increase vertical height of the pressure location, the upper bladder 64 beings to inflate while the middle bladder 62 starts to deflate, and inflation continues until a desired upper pressure location is achieved. This may include partial inflation of both the middle bladder 62 and upper bladder 64, or the middle bladder 62 may also be almost completely deflated while the upper bladder 64 is almost completely inflated. A maximum height pressure position would include the upper fluid bladder 64 being completely inflated and middle fluid bladder 62 being substantially deflated.

In one example, to decrease the vertical height of the pressure location, the base bladder 60 begins to inflate while the middle bladder 62 starts to deflate, and inflation continues in the base bladder 60 until a desired lower pressure location is achieved. This may include partial inflation of both the middle bladder 62 and base bladder 60, or the middle bladder 62 may also be almost completely deflated while the base bladder 60 is almost completely inflated. A lowest height pressure position would include the base fluid bladder 60 being completely inflated and the middle fluid bladder 62 being substantially deflated.

Additionally, once a desired vertical pressure location is achieved in the seat back 14, the pressure can be adjusted in the lateral direction (right/left) by inflating/deflating the fluid bladder 60, 62, or 64 associated with the desired vertical pressure location.

The inflate/deflate operation for the seat cushion side bolster regions 20 occurs similarly to the three fluid bladder configuration used in the seat back 14. For example, adjustment in the fore/aft direction for inflating the bladders 60, 62, 64 of the seat cushion 12 occurs similarly to that of the adjustment of the bladders 60, 62, 64 in the vertical direction for the seat back 14. Similarly, adjustment in the lateral direction occurs similarly to that of the adjustment in the lateral direction for the seat back 14.

In one implementation, variable bolster settings associated with different driving modes can be stored in memory. For example, selected bolster settings are storable within a memory device 66 (Figure 2) associated with the actuator assembly 38. In one example, the memory device 66 comprises non-volatile memory such as Electrically Erasable Programmable Read-Only Memory (EEPROM), flash memory, or any other similar device. In one example, a plurality of driving modes (e.g., normal mode, eco mode, sport mode, comfort mode, off-road mode, snow or slippery mode, mud or sand mode, individual/custom mode, etc.) are each associated with a set of bolster settings that are storable within the memory device 66 associated with the actuator assembly 38. In one implementation, bolster pressure is automatically adjusted to the set of bolster settings associated with a selected driving mode of the plurality of driving modes.

In one example, pressure is adjusted via a single switch 68 (Figure 2) that is selectively actuatable in multiple directions. One such switch is a 4-way rocker switch, for example, wherein movement is controlled in four directions: up/down or fore/aft; and lateral (left/right). A post or toggle member 56 is moveable relative to a support base 58 to be moved in four different directions as shown in Figure 6. The switch 68 communicates with the controllers 42 to cause inflation/deflation of the bladders 30, 32 via the actuator assembly 38 and valve bank 40.

In one implementation, the seat back 14 and the seat cushion 12 each have one single switch 68 such that there is one switch 68 dedicated to control movement in all directions.

In one implementation, the single switch comprises one switch 68 for both the seat back 14 and the seat cushion 12. In this example, a user assigns the single switch 68 to one of the seat back 14 and the seat cushion 12 via a selection that is input to a user interface 70. Examples of the user interface 70 include one or more of: a user input to physical controls such as dash buttons/toggles, knobs, dials; a touch-screen interface; or voice recognition.

In one example, a user provides input to the user interface 70 by pushing a dash button or touching a screen interface to select the seat back 14 or seat cushion 12 to be assigned to the switch 68.

In implementations, instead of using a switch, the pressure may be adjusted/controlled directly with the user interface 70, e.g., touchscreen, dashboard input, or smart device such as a phone or tablet.

In one example, there is the ability for a user to store selected bolster settings for the seat cushion 12 and seat back 14 in the memory device 66. Further, the user may have the ability to store selected bolster settings for different driving modes, and once driving mode is selected, bolster pressure is automatically adjusted via the controllers 42, actuator assembly 38, and valve bank 40 to achieve the pre-set bolster settings associated with the selected driving mode.

In one example, the memory device 66 comprises non-volatile memory, where stored information is retained even when power is removed, making it suitable for storing settings such as seat positions, bolster settings, etc. in a vehicle's memory system. This allows the vehicle to recall and adjust the seat pressures to a previously saved pressure even after the vehicle has been turned off.

As discussed above, the user can select amongst a plurality of driving modes. Vehicles often offer various driving modes to cater to different driving conditions and preferences. Examples of driving modes found in vehicles include the following.

One example drive mode is a standard or normal mode. This mode provides a balanced driving experience suitable for everyday driving conditions. Typically, it offers a standard balance between performance, fuel efficiency, and comfort.

One example drive mode is an eco-mode. The eco mode is designed to optimize fuel efficiency by adjusting engine performance, throttle response, and other vehicle settings. It may reduce power output and adjust transmission shifting to prioritize fuel economy.

One example drive mode is a sport mode. This mode enhances the vehicle's performance characteristics by adjusting engine tuning, throttle response, transmission shifting, and sometimes suspension settings. It typically increases throttle responsiveness and allows for more aggressive driving dynamics.

One example drive mode is a comfort mode. This mode prioritizes a smoother and more comfortable driving experience by adjusting suspension settings, steering response, and sometimes throttle mapping. It aims to minimize road imperfections and reduce driver fatigue.

One example drive mode is an off-road mode. This mode is tailored for driving on rough terrain. It adjusts traction control, stability control, throttle response, and sometimes suspension settings to enhance traction and maneuverability off-road.

One example drive mode is a snow or slippery mode. This mode optimizes vehicle settings for driving in slippery conditions such as snow, ice, or rain. It may adjust throttle response, traction control, and stability control to improve traction and stability.

One example drive mode is an individual/custom mode: Some vehicles offer the option to customize driving settings according to the driver's preferences. In this mode, drivers can adjust various parameters such as throttle response, steering sensitivity, suspension stiffness, and transmission behavior to create a personalized driving experience.

The subject disclosure also provides for a method of selectively adjusting pressure within a plurality of fluid bladders 30, 32 in each side bolster region 20, 24 of a seat back 14 or seat cushion 12 in multiple directions until a desired pressure at a desired location is achieved.

One example method comprises: layering at least a subset of fluid bladders from a plurality of fluid bladders in each side bolster region of a seat cushion or a seat back; and selectively adjusting pressure in one or more fluid bladders of the subset of fluid bladders in a plurality of directions.

Additional steps of the method include any of the following steps either in addition to, or in any combination thereof.

In one example, the the subset of fluid bladders in each side bolster region comprises at least a first fluid bladder that comprises a base fluid bladder, a second fluid bladder, and a third fluid bladder; and the method further includes layering the subset of fluid bladders in each side bolster region along a linear path by resting the second fluid bladder on top of the base fluid bladder and partially overlapping one end of the base fluid bladder, and resting the third fluid bladder on top of the second fluid bladder and partially overlapping one end of the second fluid bladder.

In one example, the method further includes selectively moving a maximum pressure to a selected location along the linear path via rolling inflation and deflation of the base fluid bladder, the second fluid bladder, and the third fluid bladder.

In one example, the method further includes independently controlling inflation and deflation of each fluid bladder with an actuator assembly that includes a fluid supply and one or more controllers that regulate inflation and deflation of each fluid bladder.

In one example, the method further includes: storing selected bolster settings within a memory device associated with the actuator assembly; or associating each driving mode of a plurality of driving modes with a set of bolster settings that are storable within a memory device associated with the actuator assembly, and automatically adjusting bolster pressure to the set of bolster settings associated with a selected driving mode of the plurality of driving modes.

The subject disclosure also provides for an apparatus that can selectively adjust pressure within a plurality of fluid bladders 30, 32 in each side bolster region 20, 24 of a seat back 14 or seat cushion 12 in multiple directions until a desired pressure at a desired location is achieved.

In one example, an apparatus comprises: a seat cushion; a seat back supported relative to the seat cushion, wherein at least one of the seat back and the seat cushion includes at least two side bolster regions spaced apart laterally from each other; a plurality of fluid bladders associated with each of the at least two side bolster regions, wherein at least a subset of fluid bladders in each side bolster region at least partially overlap each other; and pressure in each fluid bladder is selectively adjustable in a plurality of directions.

Additional features of the apparatus include any of the following either in addition to, or in any combination thereof.

In one example, an actuator assembly independently controls inflation and deflation of each fluid bladder.

In one example, the actuator assembly includes a fluid supply and one or more controllers that regulate inflation and deflation of each fluid bladder.

In one example, the fluid supply is connected to a valve bank, and wherein each fluid bladder has a dedicated valve in the valve bank and a dedicated fluid connection line that connects each fluid bladder to an associated dedicated valve.

In one example, the plurality of fluid bladders comprise bolster bladders or massage bladders, or the plurality of fluid bladders comprise bolster bladders and massage bladders.

In one example, the subset of fluid bladders in each side bolster region are layered along a linear path and comprise at least a first fluid bladder that comprises a base fluid bladder, a second fluid bladder that rests on top of and partially overlaps the base fluid bladder, and a third fluid bladder that rests on top of and partially overlaps the second fluid bladder.

In one example, the subset of fluid bladders in each side bolster region cooperate with each other such that there is rolling inflation and deflation of the base fluid bladder, the second fluid bladder, and the third fluid bladder along the linear path such that a maximum pressure is selectively movable to a selected location.

In one example, when the second fluid bladder is inflated, the maximum pressure is movable in a first direction along a vertical linear path or longitudinal linear path by inflating the third fluid bladder while the second fluid bladder deflates, and wherein the maximum pressure is movable in a second direction, opposite of the first direction, by inflating the base fluid bladder while the second fluid bladder deflates.

In one example, the maximum pressure is adjustable in opposing directions along a lateral linear path by inflating and deflating at least one of the base fluid bladder, the second fluid bladder, and the third fluid bladder that is associated with a maximum pressure location along the vertical linear path or the longitudinal linear path.

In one example, pressure in the subset of fluid bladders in each side bolster region of the seat back is adjustable along a vertical linear path, and wherein the pressure is in the subset of fluid bladders in each side bolster region of the seat back is adjustable along a lateral linear path .

In one example, pressure in the subset of fluid bladders in each side bolster region of the seat cushion is adjustable along a longitudinal linear path, and wherein the pressure is in the subset of fluid bladders in each side bolster region of the seat cushion is adjustable along a lateral linear path.

In one example, selected bolster settings are storable within a memory device associated with the actuator assembly, or wherein a plurality of driving modes are each associated with a set of bolster settings that are storable within a memory device associated with the actuator assembly, and wherein bolster pressure is automatically adjusted to the set of bolster settings associated with a selected driving mode of the plurality of driving modes.

In one example, pressure is adjusted via a single switch that is selectively actuatable in multiple directions.

In one example, the seat back and the seat cushion each have one single switch, or the single switch comprises one switch for both the seat back and the seat cushion, wherein a user assigns the single switch to one of the seat back and the seat cushion via a selection that is input to a user interface.

In one example, the single switch comprises a four-way rocker switch.

Although the different examples have the specific components shown in the illustrations, embodiments of this disclosure are not limited to those particular combinations. It is possible to use some of the components or features from one of the examples in combination with features or components from another one of the examples. In addition, the various figures accompanying this disclosure are not necessarily to scale, and some features may be exaggerated or minimized to show certain details of a particular component or arrangement.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. An apparatus comprising:
a seat cushion;
a seat back supported relative to the seat cushion, wherein at least one of the seat back and the seat cushion includes at least two side bolster regions spaced apart laterally from each other;
a plurality of fluid bladders associated with each of the at least two side bolster regions, wherein at least a subset of fluid bladders in each side bolster region are aligned with each other; and
pressure in each fluid bladder is selectively adjustable in a plurality of directions.

2. The apparatus of claim 1, wherein at least a subset of fluid bladders in each side bolster region at least partially overlap each other, and including an actuator assembly that independently controls inflation and deflation of each fluid bladder.

3. The apparatus of claim 2, wherein the actuator assembly includes a fluid supply and one or more controllers that regulate inflation and deflation of each fluid bladder, wherein preferably the fluid supply is connected to a valve bank, and each fluid bladder has a dedicated valve in the valve bank and a dedicated fluid connection line that connects each fluid bladder to an associated dedicated valve.

4. The apparatus of any of claims 2 or 3, wherein:
the plurality of fluid bladders comprise bolster bladders or massage bladders; or
the plurality of fluid bladders comprise bolster bladders and massage bladders.

5. The apparatus of any of claims 2 to 4, wherein the subset of fluid bladders in each side bolster region are layered along a linear path and comprise at least a first fluid bladder that comprises a base fluid bladder, a second fluid bladder that rests on top of and partially overlaps the base fluid bladder, and a third fluid bladder that rests on top of and partially overlaps the second fluid bladder.

6. The apparatus of claim 5, wherein the subset of fluid bladders in each side bolster region cooperate with each other such that there is rolling inflation and deflation of the base fluid bladder, the second fluid bladder, and the third fluid bladder along the linear path such that a maximum pressure is selectively movable to a selected location.

7. The apparatus of claim 6, wherein, when the second fluid bladder is inflated, the maximum pressure is movable in a first direction along a vertical linear path or longitudinal linear path by inflating the third fluid bladder while the second fluid bladder deflates, and wherein the maximum pressure is movable in a second direction, opposite of the first direction, by inflating the base fluid bladder while the second fluid bladder deflates,
wherein preferably the maximum pressure is adjustable in opposing directions along a lateral linear path by inflating and deflating at least one of the base fluid bladder, the second fluid bladder, and the third fluid bladder that is associated with a maximum pressure location along the vertical linear path or the longitudinal linear path.

8. The apparatus of any of claims 2 to 7, wherein pressure in the subset of fluid bladders in each side bolster region of the seat back is adjustable along a vertical linear path, and wherein the pressure is in the subset of fluid bladders in each side bolster region of the seat back is adjustable along a lateral linear path .

9. The apparatus of any of claims 2 to 7, wherein pressure in the subset of fluid bladders in each side bolster region of the seat cushion is adjustable along a longitudinal linear path, and wherein the pressure is in the subset of fluid bladders in each side bolster region of the seat cushion is adjustable along a lateral linear path.

10. The apparatus of any of claims 2 to 9, wherein selected bolster settings are storable within a memory device associated with the actuator assembly, or wherein a plurality of driving modes are each associated with a set of bolster settings that are storable within a memory device associated with the actuator assembly, and wherein bolster pressure is automatically adjusted to the set of bolster settings associated with a selected driving mode of the plurality of driving modes.

11. The apparatus of any of the preceding claims, wherein pressure is adjusted via a single switch that is selectively actuatable in multiple directions.

12. The apparatus of claim 11, wherein:
the seat back and the seat cushion each have one single switch; or
the single switch comprises one switch for both the seat back and the seat cushion, wherein a user assigns the single switch to one of the seat back and the seat cushion via a selection that is input to a user interface, or
wherein the single switch comprises a four-way rocker switch.

13. A method comprising:
aligning at least a subset of fluid bladders from a plurality of fluid bladders in each side bolster region of a seat cushion or a seat back; and
selectively adjusting pressure in one or more fluid bladders of the subset of fluid bladders in a plurality of directions.

14. The method of claim 13, wherein the subset of fluid bladders in each side bolster region comprises at least a first fluid bladder that comprises a base fluid bladder, a second fluid bladder, and a third fluid bladder; and
including layering the subset of fluid bladders in each side bolster region along a linear path by resting the second fluid bladder on top of the base fluid bladder and partially overlapping one end of the base fluid bladder, and resting the third fluid bladder on top of the second fluid bladder and partially overlapping one end of the second fluid bladder, preferably including selectively moving a maximum pressure to a selected location along the linear path via rolling inflation and deflation of the base fluid bladder, the second fluid bladder, and the third fluid bladder.

15. The method of any of claims 13 or 14, including independently controlling inflation and deflation of each fluid bladder with an actuator assembly that includes a fluid supply and one or more controllers that regulate inflation and deflation of each fluid bladder,
the method preferably including:
storing selected bolster settings within a memory device associated with the actuator assembly, or
associating each driving mode of a plurality of driving modes with a set of bolster settings that are storable within a memory device associated with the actuator assembly, and automatically adjusting bolster pressure to the set of bolster settings associated with a selected driving mode of the plurality of driving modes.
